# EUROPÄISCHE PATENTANMELDUNG

(11) **EP 4 027 205 A2**
(43) Veröffentlichungstag der Anmeldung: **13.07.2022**
(21) Anmeldenummer: 21208174.9
(22) Anmeldetag: 15.11.2021
(51) Int. Cl.: G05B 19/042, G06N 3/08

(54) **VERFAHREN ZUM BEREITSTELLEN EINES KONFIGURATIONS-DATENSATZES EINER ENTITÄT**

(30) Priorität: 11.01.2021 DE 102021200190
(71) Anmelder: GEZE GmbH, 71229 Leonberg (DE)
(72) Erfinder: Jauß, Dominik, 71229 Leonberg (DE)

(57) **Zusammenfassung**

Die vorliegende Erfindung betrifft ein erstes Verfahren zum Bereitstellen eines spezifischen Konfigurations-Datensatzes einer Entität, ein zweites Verfahren, das mit dem ersten Verfahren zusammenwirken kann, ein drittes Verfahren zum Generieren eines Trainings-Datensatzes zum Trainieren eines Datenmodells für das maschinelle Lernen, das in dem zweites Verfahren verwendet werden kann, ein viertes Verfahren zum Trainieren eines solchen Datenmodells für das maschinelle Lernen sowie Vorrichtungen, ein Computerprogrammprodukt und eine Signalfolge.

## Beschreibung

### Bezeichnung der Erfindung

Verfahren zum Bereitstellen eines Konfigurations-Datensatzes einer Entität

### Gebiet der Technik

Die vorliegende Erfindung betrifft ein erstes Verfahren zum Bereitstellen eines spezifischen Konfigurations-Datensatzes einer Entität, ein zweites Verfahren, das mit dem ersten Verfahren zusammenwirken kann, ein drittes Verfahren zum Generieren eines Trainings-Datensatzes zum Trainieren eines Datenmodells für das maschinelle Lernen, das in dem zweites Verfahren verwendet werden kann, ein viertes Verfahren zum Trainieren eines solchen Datenmodells für das maschinelle Lernen sowie Vorrichtungen, ein Computerprogrammprodukt und eine Signalfolge.

### Stand der Technik

AutomatischeTür- und Fensteranlagen sind aus dem Stand der Technik bekannt. Es stellt jedoch einen zeit- und damit kostenintensiven Vorgang dar, solche Anlagen im Rahmen der Inbetriebnahme, der Wartung und des Austauschs zu konfigurieren. Dies gilt umso mehr, wenn die Konfiguration unterdem Gesichtspunkt eines hohen Qualität- und Sicherheitsverlangens erfolgt.

### Zusammenfassung der Erfindung

Es ist daher Aufgabe der vorliegenden Erfindung, die beschriebenen Nachteile des Stands der Technik zu überwinden und insbesondere eine effiziente und vor allem zuverlässige und sichere Konfiguration von Anlagen, wie insbesondere automatische Tür- und Fensteranlagen, zu ermöglichen.

Die Aufgabe wird durch die Erfindung gemäßeinem ersten Aspekt dadurch gelöst, dass ein Verfahren zum Bereitstellen eines spezifischen Konfigurations-Datensatzes einer Entität, wobei das Verfahren aufweist:
Überwachen des Eintretens wenigstens eines spezifischen Ereignisses in Bezug auf einen bestehenden Konfigurations-Datensatz der Entität, und dass, wenn das Eintreten eines spezifischen Ereignisses festgestellt wird, in Abhängigkeit des festgestellten spezifischen Ereignisses ein spezifisches Modul ausgewählt und/oder ausgeführt wird,
wobei das spezifische Modul jeweils wenigstens aufweist,
dass der spezifische Konfigurations-Datensatz aufgebaut wird und zumindest ein von Seiten wenigstens einer Quelle empfangenes Datum und/oder zumindest ein aus dem bestehenden Konfigurations-Datensatz übernommenes Datum aufweist, und
dass der spezifische Konfigurations-Datensatz einer zentralen Instanz und/oder der Entität bereitgestellt wird;
wobei die Entität eine automatische Türanlage, eine automatische Toranlage, eine automatische Fensteranlage und/oder eine automatische Lichtanlage aufweist und/oder darstellt, vorgeschlagen wird.

Der Erfindung liegt damit die überraschende Erkenntnis zugrunde, dass die Konfiguration von Entitäten, wie automatische Tür- und Fensteranlagen, dadurch besonders einfach und dennoch sicher ermöglicht werden kann, indem auf ereignisbasiert erstellte und bereitgestellte spezifische Konfigurations-Datensätze zurückgegriffen wird.

Die spezifischen Konfigurations-Datensätze können dabei automatisch anhand definierter oder definierbarer spezifischer Ereignisse erstellt und verschiedenen Teilnehmern bereitgestellt werden, so dass eine über mehrere Teilnehmer hinweg konsistente Datenbasis geschaffen werden kann. Dies wiederum ermöglicht es, eine Konfiguration von Entitäten in einfacher und zuverlässiger Weise vorzunehmen und zu optimieren. Dadurchwird ein sicherer Betriebder Entitäten gewährleistet.

Beispielsweise kann damit verbunden ein teilnehmerübergreifender Abgleich von Konfigurations-Datensätzen erfolgen und so veraltete Konfigurationen einer Entität erkannt und durch die Bereitstellung eines neuen Konfigurations-Datensatzes angepasst werden. Das ist gerade bei der Erstinbetriebnahme einer Entität oder nach einem Austausch ihrer Steuereinheit besonders nützlich, um eine ordnungsgemäße Konfiguration der Entität sicherzustellen. Dadurch kann das Risiko einer ungünstigen Konfiguration einer Entität deutlich reduziert oder sogar ganz vermieden.

Durch die Datenredundanz kann zudem ein Datenverlust wirkungsvoll verhindert und etwa bei der Wartung einer Entität auf zuvor gesicherte Konfigurations-Datensätze besonders effizient wieder zurückgegriffen werden. Dadurch lassen sich Technikereinsätze ganz vermieden oder zumindest schneller abschließen. Dies spart Kosten und gleichzeitig wird die Qualität des Produkts insgesamt gesteigert.

Da das Verfahren nahtlos mit einer zentralen Instanz zusammenarbeiten kann, indem es ihr Konfigurations-Datensätze bereitstellen und von ihr beziehen kann, lässt sich besonders einfach und effizient eine zentrale Koordinierung auch mehrerer Entitäten realisieren. Das Verfahren kann damit auch eine wichtige Komponente für "Big Data"-Anwendungen darstellen. Denn die zentrale Instanz kann sämtliche von dem Verfahren bereitgestellten Konfigurations-Datensätze, ggf. zusammen mit weiteren Informationen zu den Entitäten wie Analyse-Daten, auswerten und verarbeiten. Entsprechend können von dort auch wieder für die individuellen Entitäten optimierte Konfigurations-Datensätze empfangen werden. So kann vermittelt durch das vorgeschlagene Verfahren die einzelne Entität von anderen Entitäten profitieren, indem sie einen optimierten Konfigurations-Datensatz erhält.

Die Servicierung und Inbetriebnahme von Entitäten kann folglich einfacher und ohne Expertenwissen zu den spezifischen Einstellungen der Entität durchgeführt werden. Dadurch kann Zeit bei der Reparatur, beim Steuerungsaustausch und der Inbetriebnahme gespart werden. Außerdem kann die Qualität erhöht werden, da die Konfigurationen zentral optimiert werden können. Auch kann durch die Bereitstellung des spezifischen Konfigurations-Datensatzes an eine zentrale Instanz auch aus der Ferne eine schnelle und gründliche Diagnose und ggf. Anpassung der Konfigurationen der Entität durchgeführt werden.

Das Verfahren ermöglicht es daher den Betrieb von Entitäten sicherer zu gestalten. Selbst komplexe Verteilungswege des spezifischen Konfigurations-Datensatzes können dabei übersichtlich gehandhabt werden. Gleichzeitig ist das Verfahren in hohem Maße flexibel im Einsatz, was es für unterschiedlichste Rahmenbedingung geeignet macht.

Durch den modularen Aufbau, der dem Verfahren zugrunde liegt, kann für verschiedene Ereignisse jeweils eine maßgeschneiderte und damit zielgerichtete Maßnahme zum Einsatz kommen. Dadurch kann jeweils zielgerichtet ein spezifischer Konfigurations-Datensatz bereitgestellt werden. Insbesondere zeigt sich, dass es der modulare Aufbau besonders gut ermöglicht, das Verfahren flexibel erweitern oder reduzieren zu können. So ist die Handhabung von neuen Ereignissen besonders einfach möglich, indem einfach ein entsprechendes Modul in das Verfahren mit eingebunden wird. Auch eine besonders feingranulare Unterscheidung zwischen einzelnen Ereignissen ist damit sehr einfach und effizient realisierbar.

In einer Ausführungsform kann für jede Entität individuell festgelegt werden, welche spezifischen Ereignisse überwacht werden. Dadurch ist es möglich, genau nur die Ressourcen zu beanspruchen, die für eine bestimmte Entität notwendig sind. So müssen je nach Entität nur die für diese relevanten Module verfügbar sein.

Außerdem ist gerade bei der elektronischen Datenverarbeitung, insbesondere also, wenn das Verfahren computerimplementiert realisiert wird, eine besonders hohe Effizienz möglich, da Ressourcen des verarbeitenden Systems nur sparsam beansprucht werden. Denn es müssen in diesem Fall nicht gleich zu Beginn alle überhaupt denkbaren Module geladen und im Speicher vorgehalten werden. Stattdessen müssen erst dann Systemressourcen für ein Modul reserviert und beansprucht werden, wenn und soweit ein spezifisches Modul aufgrund eines entsprechenden spezifischen Ereignisses ausgewählt wird und zum Einsatz kommt.

Das jeweils aktivierte spezifische Modul kann dabei effizient arbeiten, denn es kann in einer Ausführungsform auf die Daten des bestehenden Konfigurations-Datensatzes zurückgreifen, um den spezifischen Konfigurations-Datensatz aufzubauen. Damit können bereits bestehende Daten aus dem bestehenden Konfigurations-Datensatzes direkt in den spezifischen Konfigurations-Datensatz übernommen werden.

Ein "spezifisches Modul" im Sinne der vorliegenden Erfindung kann beispielsweise in Software, in Hardware oder einer Kombination von beidem realisiert sein. Ein "spezifisches Modul" im Sinne der vorliegenden Erfindung kann alternativ oder ergänzend einen Speicher, einen Prozessor, eine Empfangseinrichtung, eine Sendeeinrichtung oder eine beliebige Kombination davon aufweisen. Ein "spezifisches Modul" im Sinne der vorliegenden Erfindung kann alternativ oder ergänzend alles, was von ihm aufgewiesen ist, wie insbesondere alle dafür notwendigen Ressourcen, beispielsweise in Form von Software- und/oder Hardwareressourcen, für das Verfahren bereitstellen und/oder verfügbar machen und/oder aufweisen. Ein "spezifisches Modul" im Sinne der vorliegenden Erfindung kann alternativ oder ergänzend eine rein logische oder tatsächliche Gruppierung von Anweisungen innerhalb eines Programms oder eines Verfahrensablaufs darstellen und/oder aufweisen. Ein "spezifisches Modul" im Sinne der vorliegenden Erfindung kann alternativ oder ergänzend eine Klasse, eine Funktion, eine Datei und/oder eine Programm-Bibliothek sein und/oder aufweisen, die auswählbar, aufrufbar, ausführbar, in einen Speicher ladbar und/oder in einem Speicher dauerhaft oder vorübergehend vorhaltbar ist.

Es ist dabei bevorzugt, dass jedes spezifische Modul eigenständig ausgebildet ist. Aber in anderen bevorzugten Ausführungsformen können auch zwei oder mehr spezifische Module innerhalb eines gemeinsamen Moduls ausgebildet oder von diesem aufgewiesen sein.

Ein "Konfigurations-Datensatz" im Sinne der vorliegenden Erfindung kann beispielsweise eine Sammlung von einem oder mehreren Daten, die die ganz oder teilweise Konfiguration einer Entität oder Teile von ihr, insbesondere ihre Steuereinheit, ermöglicht, aufweisen oder darstellen. Ein Datum kann beispielsweise einen Konfigurations-Parameter und einen zugehörigen Konfigurations-Wert der Entität aufweisen. Beispielsweise kann der Konfigurations-Datensatz, insbesondere die von ihm aufgewiesenen Daten, in einer Datenstrukturorganisiert sein.

Eine Datenstruktur kann eine effiziente Speicherung der Daten des Konfigurations-Datensatzes und damit auch einen effizienten Zugriff auf diese Daten ermöglichen. Die Datenstruktur kann zielgerichtet beispielsweise anhand eines Identifizierers der Entität aufgefunden werden. Damit ist auch der Zugriff auf ihre Konfigurations-Datensätze sehr effizient möglich.

Ein "bestehender Konfigurations-Datensatz" kann beispielsweise ein Konfigurations-Datensatz darstellen, mit dem die Entität aktuell konfiguriert ist. Ein "spezifischer Konfigurations-Datensatz" kann ein Konfigurations-Datensatz darstellen, mit dem die Entität grundsätzlich konfiguriert werden kann, es aber aktuell und/oder zukünftig nicht sein muss.

Wenn eine Entität mit einem Konfigurations-Datensatz konfiguriert ist, kann dies beispielsweise bedeuten, dass die Entität für diejenigen Einstellungsmöglichkeiten der Entität, für die der Konfigurations-Datensatz Einstellungen vorgibt, gemäß den Daten des Konfigurations-Datensatzes konfiguriert ist.

In einer Ausführungsform wird die Entität mit dem bereitgestellten spezifischen Konfigurations-Datensatz konfiguriert. Optional wird die Konfiguration erst durchgeführt, wenn dies separat bestätigt wurde, beispielsweise indem ein entsprechend lautendes Eingabesignal empfangen wurde. In einer Ausführungsform wird ein spezifischer Konfigurations-Datensatz infolge der Konfiguration der Entität mit diesem zu einem bestehenden Konfigurations-Datensatz.

Wenn in dieser Anmeldung davon gesprochen wird, dass in einem Verfahren etwas, wie ein Konfigurations-Datensatz, "von Seiten X" empfangen wird, so kann dies bedeuten, dass X das Etwas sendet oder anderweitig zur Verfügung stellt und dieses Etwas dann im Verfahren empfangen wird. Wenn in dieser Anmeldung davon gesprochen wird, dass etwas, wie ein Konfigurations-Datensatz, "bereitgestellt" wird, so kann dies bedeuten, dass das Etwas beispielsweise an einen anderen Teilnehmer gesendet wird, einem Teilnehmer zum Abrufen zur Verfügung gestellt wird und/oder in einem Speicher abgelegt wird.

In einer Ausführungsform ist die Entität eine Anlage, wie eine automatische Türanlage, insbesondere eine Drehtüre, eine Karusselltüre und/oder eine Schiebetüre, und/oder eine automatische Fensteranlage, insbesondere ein Dachfenster, oder eine von ihr aufgewiesene Steuereinheit, oder weist diese auf.

In einer Ausführungsform wird das Verfahren von der Entität, insbesondere von einer von ihr aufgewiesenen Steuereinheit, ausgeführt. In einer Ausführungsform wird das Verfahren von einem Client ausgeführt, der von der Entität verschieden ist.

Wenn die Entität etwa eine Drehtür ist, kann ein Konfigurations-Datensatz unter anderem einen Konfigurations-Parameter "Drehgeschwindigkeit" und einen Konfigurations-Parameter "Im Betrieb ständig drehen" aufweisen. Diesen Konfigurations-Parametern kann dann wiederum ein Konfigurations-Wert von "3 Umdrehungen pro Minute" bzw. von "Ja" zugewiesen sein. Eine damit konfigurierte Drehtür würde sich im Betrieb ständig drehen und zwar mit 3 Umdrehungen pro Minute.

Das vorgeschlagene Verfahren eignet sich daher besonders gut beim Einsatz zusammen mit Entitäten in Form von automatischen Fensteranlagen, automatischen Toranlagen, automatischen Lichtanlagen und/oder automatischenTüranlagen. Das Verfahren kann auch besonders gut in vernetzten Systemen eingesetzt werden.

In einer Ausführungsform weist eine automatische Türanlage eine automatische Schiebetüre, eine automatische Drehtüre und/oder eine automatische Karusselltüre auf oder stellt diese dar.

In einer Ausführungsform weist eine automatische Lichtanlage eine automatische Oberlichtanlage auf oder stellt diese dar.

In einer Ausführungsform ist die zentrale Instanz wenigstens ein entfernter Rechner, insbesondere wenigstens ein Server und/oder ein Cloud-System, oder weist diese(n/s) auf.

In einer Ausführungsform werden zu wenigstens zwei zeitlich unterschiedlichen spezifischen Zeitpunkten jeweils ein spezifisches Ereignis festgestellt, vorzugsweise zu jedem der spezifischen Zeitpunkte zumindest teilweise ein unterschiedliches spezifisches Ereignis, und das jeweils zugehörige spezifische Modul ausgewählt bzw. ausgeführt.

In einer bevorzugten Ausführungsform kann vorgesehen sein, dass das Verfahren ferner aufweist,
dass Daten zum Aktualisieren und/oder Ergänzen der von dem bestehenden Konfigurations-Datensatz umfassten Daten von Seiten einer ersten Quelle empfangen und/oder verarbeitet werden, und damit verbunden ein erstes spezifisches Ereignis eintritt und festgestellt wird und ein erstes spezifisches Modul ausgewählt bzw. ausgeführt wird,
wobei das erste spezifische Modul aufweist,
dass der spezifische Konfigurations-Datensatz zumindest die von Seiten der ersten Quelle empfangenen Daten aufweist, und insbesondere der spezifische Konfigurations-Datensatz an die zentrale Instanz und/oder die Entität gesendet wird,
wobei vorzugsweise der spezifische Konfigurations-Datensatz aus dem bestehenden Konfigurations-Datensatzes aufgebaut wird, indem einzelne in dem bestehenden Konfigurations-Datensatz bestehende Daten durch die empfangenen Daten ersetzt werden und/oder der spezifische Konfigurations-Datensatz aufgebaut wird, indem die empfangenen Daten mit weiteren Daten des bestehenden Konfigurations-Datensatzes, insbesondere denjenigen Daten des bestehenden Konfigurations-Datensatzes, für welche keine aktualisierten Daten empfangen wurden, kombiniert werden.

Wenn mit dem Eingang von Daten, die zum Aktualisieren der Daten eines bestehenden Konfigurations-Datensatzes vorgesehen sind, ein erstes spezifisches Ereignis eintritt, kann ein aktualisierter Konfigurations-Datensatz in Form des spezifischen Konfigurations-Datensatzes zielgerichtet an die beteiligten Teilnehmer ausgerollt werden. So kann er beispielsweise direkt der Entität bereitgestellt werden, beispielsweise indem er an diese gesendet wird. Dadurch kann die Konfiguration der Entität effizient aktualisiert werden.

Alternativ oder ergänzend kann der aktualisierte Konfigurations-Datensatz auch der zentralen Instanz bereitgestellt werden, beispielsweise indem er an diese gesendet wird. Dies ermöglicht eine zentrale Organisation und damit ein besonders effizientes Verwalten der Datensätzen auch von mehreren Entitäten. Außerdem kann somit besonders einfach eine Sicherungskopie des zur Konfiguration der Entität vorgesehenen Konfigurations-Datensatzes an einer zentralen Stelle vorgehalten werden.

Von der ersten Quelle können die Daten zum Aktualisieren des bestehenden Konfigurations-Datensatzes besonders zuverlässig empfangen werden. Beispielsweise kann ein Benutzer über diese Schnittstelle aktualisierte Daten eingeben und senden, welche dann im Verfahren empfangen werden. Wenn dazu die erste Quelle als Mensch-Maschine-Schnittstelle ausgestaltet ist, lässt sich der Empfang der Daten besonders einfach und zuverlässig umsetzen.

In einer Ausführungsform weist die erste Quelle wenigstens eine Mensch-Maschine-Schnittstelle, wie eine physische Tastaturoder eine Bildschirmtastatur, auf oder stellt sie dar.

Dabei kann der spezifische Konfigurations-Datensatz auch noch aus weiteren Daten aufgebaut werden, welche auch aus anderen Quellen stammen bzw. aus dem bestehenden Konfigurations-Datensatz übernommen werden können. Dies ist besonders effizient, da so der gesamte spezifische Konfigurations-Datensatz im ersten spezifischen Modul aufgebaut werden kann.

Wenn der spezifische Konfigurations-Datensatz ausgehend von dem bestehenden Konfigurations-Datensatz aufgebaut wird, indem darin lediglich diejenigen Daten geändert werden, für die aktualisierte Daten vorliegen, kann dies besonders effizient ausgeführt werden. Denn es kann beispielsweise auf die bestehende Datenstruktur des bestehenden Konfigurations-Datensatz zurückgegriffen werden und es müssen lediglich die einzelnen Aktualisierungen vorgenommen werden. Damitwerden Systemressourcen gespart.

Es kann jedoch auch vorteilhaft sein, wenn die zum Aktualisieren empfangenen Daten als Ausgangsbasis dienen und diese dann lediglich um die unveränderten Daten ergänzt werden, um den spezifischen Konfigurations-Datensatz aufzubauen. Gerade wenn die Mehrheit der Daten in dem bestehenden Konfigurations-Datensatz geändert werden, kann sich dieses Vorgehen aus Effizienzgründen anbieten.

Das Verfahren ermöglicht es damit, dass, sobald ein neuer Konfigurations-Datensatz einer Entität vorliegt, der neue Konfigurations-Datensatz der zentralen Instanz bereitgestellt wird. Dadurch liegt eine Kopie des Konfigurations-Datensatzes immer bei der zentralen Instanz vor. Dort kann er ausgewertet und/oder für spätere Rücksicherungen verwahrt werden.

Ein erstes spezifisches Ereignis kann daher festgestellt werden, wenn ein Konfigurations-Datensatz zum Ändern bereit ist, etwa da aktualisierte Daten empfangen wurden.

In einer Ausführungsform wird zu wenigstens einem ersten spezifischen Zeitpunkt das erste spezifische Ereignis festgestellt und das erste spezifische Modul ausgewählt bzw. ausgeführt.

In einer bevorzugten Ausführungsform kann vorgesehen sein, dass das Verfahren ferner aufweist,
dass ein erster Indikator ausgewertet wird und wenn ein ausgezeichneter Wert des ersten Indikators ermittelt wird, ein zweites spezifisches Ereignis eintritt und festgestellt wird und ein zweites spezifisches Modul ausgewählt bzw. ausgeführt wird,
wobei das zweite spezifische Modul aufweist,
dass ein temporärer Konfigurations-Datensatz von Seiten einer zweiten Quelle empfangen wird, insbesondere von Seiten der zentralen Instanz empfangen und/oder aus einem Speicher abgerufen wird,
und basierend auf dem temporären Konfigurations-Datensatz der spezifische Konfigurations-Datensatz aufgebaut wird, insbesondere der temporäre Konfigurations-Datensatz als der spezifische Konfigurations-Datensatz verwendet wird, und insbesondere der spezifische Konfigurations-Datensatz an die zentrale Instanz und/oder die Entität gesendet wird.

Mittels eines Indikators, wie den ersten Indikator, lässt sich sehr flexibel eine Überwachung von spezifischen Ereignissen realisieren. Ein Indikator kann dabei eine physikalische Eigenschaft eines Systems oder eines Teils davon sein. Ein Indikator kann auch ein Zustand eines elektrischen oder digitalen Signals sein, das etwa empfangen und/oder verarbeitet wird. Ein Indikator kann ferner ein Datum, das in einer Datenbank, in der Entität, und/oder in einem Konfigurations-Datensatz, wie insbesondere dem bestehenden Konfigurations-Datensatz gespeichert sein kann, sein.

Ein solcher Indikator ist auch deshalb so vorteilhaft, da er auch von außen kontrollierbar sein kann und damit das Verfahren durch externe technische Systeme beeinflusst, insbesondere kontrolliert, werden kann. Der Indikator eröffnet damit die Möglichkeit, das Verfahren mit der Umwelt und den dort befindlichen Systemen zu koppeln. Somit kann das vorgeschlagene Verfahren besonders einfach in bestehende Infrastrukturen eingebunden werden. Über einen Indikator kann dann sozusagen wenigstens ein Teil der Kommunikation zwischen dem Verfahren und der Umwelt stattfinden. Dadurch ist das Verfahren sehr universell einsetzbar und jedes bestehende System kann entsprechend erweitert werden.

Indem ein erster Indikator ausgewertet wird, kann bei Vorliegen eines ausgezeichneten Wertes dieses ersten Indikators sehr einfach und effizient auf ein zweites spezifisches Ereignis geschlossen werden. Damit verbunden können gezielt Maßnahmen ergriffen werden, indem das zweite spezifische Modul ausgewählt bzw. ausgeführt wird. Somit kann anhand eines Indikators generell das Ausführen eines spezifischen Moduls getriggert werden.

Bei einem entsprechenden zweiten spezifischen Ereignis kann der Entität sehr effizient ein Konfigurations-Datensatz in Form des spezifischen Konfigurations-Datensatzes bereitgestellt werden, indem auf einen anderenorts vorbereiteten Konfigurations-Datensatz ganz oder teilweise zurückgegriffen wird. Wenn der temporäre Konfigurations-Datensatz direkt als spezifischer Konfigurations-Datensatz verwendet wird, kann das Verfahren sehr effizient durchgeführt werden. Denn der Aufbau des spezifischen Konfigurations-Datensatzes kann dann sehr einfach durchgeführt werden. Der Aufbau des temporären Konfigurations-Datensatzes wiederum muss nicht zur Laufzeit des Verfahrens erfolgen, was somit zu diesem Zeitpunkt keine Ressourcen beansprucht.

Beispielsweise kann der erste Indikator einen ausgezeichneten Wert aufweisen, wenn die Entität vor einer Erstinbetriebnahme steht. Dann kann ein Konfigurations-Datensatz zur Inbetriebnahme in Form des temporären Konfigurations-Datensatzes beispielweise von der zentralen Instanz als zweite Quelle bezogen werden.

Ein zweites spezifisches Ereignis kann also festgestellt werden, wenn ein kompletter Konfigurations-Datensatz neu bezogen wird. Dies kann beispielsweise der Fall sein, wenn die Einstellungen einer Entität auf einen neuen Wert, wie einen Auslieferungszustand oder einen optimierten Wert, gesetzt werden sollen.

Das vorgeschlagene Verfahren ermöglicht es dadurch, dass die Konfiguration einer Entität nach einer Reparatur oder einem Austausch zuverlässig wieder bereitgestellt werden kann, indem der vormals bestehende Konfigurations-Datensatz von Seiten der zweiten Quelle bezogen wird. Dadurch wird eine manuelle Neukonfiguration der Entitätvermieden. So entfällt beispielsweise ein händisches notieren von Einstellungen der alten und das manuelle Eingeben in die neue Entität. Dies reduziert die Ausfallzeit der Entität erheblich. Auch die Qualität und Sicherheit beim Betrieb der Entität wird erhöht, da die potentielle Fehlerquelle einer Falscheingabe eliminiert wird. Auch ein Zurücksetzen der Konfiguration einer Entität auf den Abnahmezustand bzw. Auslieferungszustand ist leicht möglich.

Gerade wenn mehrere Entitäten unter eine Vielzahl von Szenarien eingesetzt werden ist das zentrale Vorhalten und das Beziehen des temporären Konfigurations-Datensatzes von derzentralen Instanz als zweite Quelle sehr effizient.

In einer Ausführungsform wird zu wenigstens einem zweiten spezifischen Zeitpunkt das zweite spezifische Ereignis festgestellt und das zweite spezifische Modul ausgewählt bzw. ausgeführt. Optional folgt der erste spezifische Zeitpunkt auf den zweiten spezifischen Zeitpunkt oder der zweite spezifische Zeitpunkt folgt auf den ersten spezifischen Zeitpunkt.

In einer Ausführungsform wird zu einem zweiten spezifischen Zeitpunkt das zweite spezifische Ereignis festgestellt und das zweite spezifische Modul ausgewählt bzw. ausgeführt und zu einem auf den zweiten spezifischen Zeitpunkt folgenden ersten spezifischen Zeitpunkt wird das erste spezifische Ereignis festgestellt und das erste spezifische Modul ausgewählt bzw. ausgeführt.

In einer Ausführungsform wird zu einem ersten spezifischen Zeitpunkt das erste spezifische Ereignis festgestellt und das erste spezifische Modul ausgewählt bzw. ausgeführt und zu einem auf den ersten spezifischen Zeitpunkt folgenden zweiten spezifischen Zeitpunkt wird das zweite spezifische Ereignis festgestellt und das zweite spezifische Modul ausgewählt bzw. ausgeführt.

In einer bevorzugten Ausführungsform kann vorgesehen sein, dass das Verfahren ferner aufweist,
dass ein zweiter Indikator ausgewertet wird und wenn ein ausgezeichneter Wert des zweiten Indikators ermittelt wird, ein drittes spezifisches Ereignis eintritt und festgestellt wird und ein drittes spezifisches Modul ausgewählt bzw. ausgeführt wird,
wobei das dritte spezifische Modul aufweist,
dass basierend auf dem bestehenden Konfigurations-Datensatz der spezifische Konfigurations-Datensatz aufgebaut wird, insbesondere der bestehende Konfigurations-Datensatz als der spezifische Konfigurations-Datensatz verwendet wird, und insbesondere der spezifische Konfigurations-Datensatz an die zentrale Instanz und/oder die Entität gesendet wird,
wobei vorzugsweise der bestehende Konfigurations-Datensatz von Seiten einer dritten Quelle empfangen wird, insbesondere von Seiten der Entität empfangen und/oder aus einem Speicher abgerufen wird.

Alternativoder ergänzend zu dem ersten Indikator kann auch ein zweiter Indikator eingesetzt werden. Auch ein Indikator wie der zweite Indikator ermöglicht das gezielte kontrollieren von bestimmten Maßnahmen. Indem vorliegend das dritte spezifische Modul ausgewählt bzw. ausgeführt wird, wenn der zweite Indikator einen ausgezeichneten Wert aufweist, kann auf ein entsprechendes drittes spezifisches Ereignis gezielt reagiert werden.

Im Fall des dritten spezifischen Ereignisses kann der bestehende Konfigurations-Datensatz etwa für den Aufbau des spezifischen Konfigurations-Datensatzes verwendet werden. Dadurch kann der zentralen Instanz bei einem entsprechenden Ereignis sehr effizient eine Kopie des bestehenden Konfigurations-Datensatz in Form des spezifischen Konfigurations-Datensatzes bereitgestellt werden.

Beispielsweise kann der zweite Indikator einen ausgezeichneten Wert aufweisen, wenn eine Diskrepanz zwischen dem bestehenden Konfigurations-Datensatz und einem bei derzentralen Instanz hinterlegten Konfigurations-Datensatz erkannt wird. Wenn die Datensituation in der Entität führend ist, kann so der Datenbestand auf Seiten der zentralen Instanz stets nachgezogen, das heißt aktuell gehalten, werden.

Damit kann ein drittes spezifisches Ereignis festgestellt werden, wenn der bestehende Datensatz an einen anderen Ort repliziert werden soll.

In einer Ausführungsform wird zu wenigstens einem dritten spezifischen Zeitpunkt das dritte spezifische Ereignis festgestellt und das dritte spezifische Modul ausgewählt bzw. ausgeführt. Optional folgt der dritte spezifische Zeitpunkt auf den ersten spezifischen Zeitpunkt, folgt der dritte spezifische Zeitpunkt auf den zweiten spezifischen Zeitpunkt, liegt der dritte spezifische Zeitpunkt vor dem ersten spezifischen Zeitpunkt und/oder liegt der dritte spezifische Zeitpunkt vor dem zweiten spezifischen Zeitpunkt.

In einer bevorzugten Ausführungsform kann vorgesehen sein, dass (i) das Auswerten des ersten Indikators aufweist,
dass ein Vergleich zwischen dem bestehenden Konfigurations-Datensatz und einem ersten Referenz-Konfigurations-Datensatz durchgeführt wird, und wenn der Vergleich ergibt, dass der bestehende Konfigurations-Datensatz dem ersten Referenz-Konfigurations-Datensatz entspricht oder nicht entspricht, der erste Indikator den ausgezeichneten Wert annimmt,
und/oder
dass ein empfangenes Eingabesignal und/oder ein Flag, insbesondere ein von dem bestehenden Konfigurations-Datensatz umfasstes Flag, ausgewertet wird, und wenn das Eingabesignal bzw. das Flag einen bestimmten Wert aufweist, der erste Indikator den ausgezeichneten Wert annimmt,
wobei vorzugsweise das Eingabesignal bzw. der Flag den bestimmten Wert aufweist, wenn die Entität einem ersten Entitäts-Zustand, insbesondere einem nicht oder nicht vollständig konfigurierten Entitäts-Zustand, entspricht.
und/oder
(ii) das Auswerten des zweiten Indikators aufweist,
dass ein Vergleich zwischen dem bestehenden Konfigurations-Datensatz und einem zweiten Referenz-Konfigurations-Datensatz durchgeführt wird, und wenn der Vergleich ergibt, dass der bestehende Konfigurations-Datensatz dem zweiten Referenz-Konfigurations-Datensatz nicht entspricht, der zweite Indikator den ausgezeichneten Wert annimmt,
und/oder
dass ein empfangenes Eingabesignal und/oder ein Flag, insbesondere ein von dem bestehenden Konfigurations-Datensatz umfasstes Flag, ausgewertet wird, und wenn das Eingabesignal bzw. das Flag einen bestimmten Wert aufweist, der zweite Indikator den ausgezeichneten Wert annimmt,
wobei jeweils vorzugsweise der Vergleich zwischen dem bestehenden Konfigurations-Datensatz und dem Referenz-Konfigurations-Datensatz durchgeführt wird, indem Hash-Werte beider Datensätze miteinander vergleichen werden, wobei vorzugsweise der Hash-Wert des Referenz-Konfigurations-Datensatz von Seiten der zentralen Instanz empfangen und/oder aus einem Speicher abgerufen wird und/oder der Hash-Wert des bestehenden Konfigurations-Datensatz von der Entität, der zentralen Instanz und/oder aus einem Speicher empfangen wird und/oder mittels einer Rechenvorschrift berechnet wird.

In einer Ausführungsform entspricht der erste Referenz-Konfigurations-Datensatz einem leeren Konfigurations-Datensatz, einem nicht-existierenden Konfigurations-Datensatz (NULL-Datensatz) oder einem Konfigurations-Datensatz mit einer definierten oder definierbaren Standard-Konfiguration.

In einer Ausführungsform entspricht der erste Referenz-Konfigurations-Datensatz einem früheren bestehenden Konfigurations-Datensatz. Damit lässt sich beispielsweise eine Rücksicherung eines früheren bestehenden Konfigurations-Datensatzes triggern, wenn der bestehende Konfigurations-Datensatz der Entität nicht führend ist.

In einer Ausführungsform entspricht der zweite Referenz-Konfigurations-Datensatz einem früheren bestehenden Konfigurations-Datensatz. Damit lässt sich beispielsweise eine Sicherung des bestehenden Konfigurations-Datensatzes triggern, wenn der bestehende Konfigurations-Datensatz der Entität führend ist.

Damit kann bei einer Differenz zwischen dem lokalen Stand des Konfigurations-Datensatzes und dem Stand des auf Seiten der zentralen Instanz gespeicherten Konfigurations-Datensatzes in Form des zweiten Referenz-Konfigurations-Datensatzeseiner Entität derjenige auf Seiten der zentralen Instanz angepasst werden. Hierbei ist dann die lokale Information führend. Dadurch liegt immer eine Kopie des aktuellen Konfigurations-Datensatzes auf Seiten der zentralen Instanz vor.

Das in Bezug auf den ersten und zweiten Indikator genannte Eingabesignal kann für beide Indikatoren gleich oder unterschiedlich sein, also ein erstes Eingabesignal für den ersten Indikator und ein zweites Eingabesignal für den zweiten Indikator.

In einer Ausführungsform weist das Eingabesignal ein analoges Signal und/oder ein Digitalsignal auf.

Der in Bezug auf den ersten und zweiten Indikator genannten Flag kann für beide Indikatoren gleich oder unterschiedlich sein, also ein erstes Flag für den ersten Indikator und ein zweites Flag für den zweiten Indikator.

Injedem der Fälle kann ein Vergleich von Konfigurations-Datensätzen besonders effizient mittels eines Hash-Wertes durchgeführt werden. Dadurch muss für einen entfernt gespeicherten oder aufbewahrten Datensatz nur dessen Hash-Wert anstelle des gesamten Datensatzes übertragen werden. Dies spart Bandbreite in einem technischen Übertragungssystem ein. Auch genügt es, lokal lediglich den Hash-Wert eines Datensatzes aufzubewahren, wasebenso Ressourcen spart.

In einer bevorzugten Ausführungsform kann vorgesehen sein, dass das Verfahren, insbesondere wenigstens eines der spezifischen Module, ferner aufweist, dass (i) der spezifische Konfigurations-Datensatz in einem lokalen Speicher gespeichert wird und/oder (ii) der bestehende Konfigurations-Datensatz, der erste Referenz-Konfigurations-Datensatz und/oder der zweite Referenz-Konfigurations-Datensatz, insbesondere aus einem lokalen Speicher, von Seiten der Entität und/oder von Seiten der zentralen Instanz, empfangen wird;
dass das Verfahren computerimplementiert ist;
dass das Verfahren von der Entität ausgeführt wird;
dass das Verfahren von einem Client ausgeführt wird;
und/oder
dass der bestehende Konfigurations-Datensatz wenigstens einen, vorzugsweise persistent in dem bestehenden Datensatz hinterlegten und/oder mit ihm assoziierten, Identifizierer der Entität aufweist.

Wenn der spezifische Konfigurations-Datensatz in einem lokalen Speicher gespeichert wird, kann besonders einfach auch zu einem späteren Zeitpunkt wieder auf diesen zugegriffen werden. Beispielsweise kann dann der spezifische Konfigurations-Datensatz aus dem Speicher empfangen werden. Der Datensatz muss also nicht ggf. nochmals von einer anderen Stelle bezogen werden. Dies spart Ressourcen und ermöglicht einen effizienten Verfahrensablauf.

Wenn der bestehende Konfigurations-Datensatz entsprechend bezogen wird, kann sichergestellt werden, dass eine aktuelle Version des bestehenden Konfigurations-Datensatzes verwendet wird.

In einer Ausführungsform ist das Verfahren computerimplementiert. Dies ist vorteilhaft, denn so können die Vorteile des Verfahrens, wie etwa eine effiziente Datenverarbeitung, auch in Umgebungen der elektronischen Datenverarbeitung ausgenutzt werden. Das Verfahren kann alternativ oder ergänzend durch ein eingebettetes System und/oder durch ein Betriebssystem ausgeführt werden.

Wenn die Entität selbst das Verfahren ausführt, kann ein bereitgestellter spezifischer Konfigurations-Datensatz direkt von ihr eingesetzt werden. Dies ist sehr effizient.

Wenn ein Client das Verfahren ausführt, kann das Verfahren besonders effizient sozusagen als Mittelsmann zwischen der Entität und der zentralen Instanz ausgeführt werden. Auch können optional mit einem Client auch unterschiedliche Entitäten hinsichtlich ihrer Konfigurations-Datensätze besonders einfach betreut werden.

Wenn der bestehende Konfigurations-Datensatz einen Identifiziererder Entität aufweist, lässt sich der bestehende Konfigurations-Datensatz sicher und zuverlässig der richtigen Entität zuordnen. Bei einer persistenten Hinterlegung bzw. Assoziierung ist eine dauerhafte Zuordenbarkeit gewährleistet, beispielsweise da der Identifizierer schreibgeschützt ist und/oder automatisch dem Konfigurations-Datensatz hinzugefügt wird.

In einer Ausführungsform weist der spezifische Konfigurations-Datensatz wenigstens einen Identifiziererder Entität auf und/oder ist mit diesem assoziiert. Dies ist gleichermaßen vorteilhaft.

Die Aufgabe wird durch die Erfindung gemäß einem zweiten Aspekt dadurch gelöst, dass eine Vorrichtung, insbesondere Vorrichtung zur Datenverarbeitung, wobei die Vorrichtung dazu eingerichtet ist, ein Verfahren gemäß dem ersten Aspekt der Erfindung auszuführen vorgeschlagen wird.

Damit kann das Verfahren gemäßdem ersten Aspekt der Erfindung besonders einfach in Verbindung mit der Entität durchgeführt werden. Beispielsweise kann die Vorrichtung zumindest zeitweise während der Durchführung des Verfahrens mit der Entität gekoppelt werden. Beispielsweise kann die Vorrichtung und die Entität mittelseiner Funkschnittstelle, wie insbesondere Wireless LAN, RFID oder Bluetooth, oder einer Kabelverbindung, wie LAN oder USB, miteinander verbunden werden, so dass beide Daten miteinander austauschen können.

Vorzugsweise stellt die Vorrichtung zur Datenverarbeitung einen Computer, insbesondere einen Server, oder ein Computernetzwerkdar oder weist diesen bzw. dieses auf.

In einer Ausführungsform ist die Vorrichtung Teil einer von der Entität umfassten Steuereinheit oder stellt diese dar. Optional ist die Entität eine automatische Anlage, wie eine automatische Tür-, Tor-, Fenster- und/oder Lichtanlage. Die Vorrichtung kann alternativ oder ergänzend ein eingebettetes System aufweisen oder darstellen.

In einer Ausführungsform ist die Vorrichtung ein, vorzugsweise von der Entität unterschiedlicher, Client, insbesondere ein mobiles Telekommunikationsgerät, wie insbesondere einem Smartphone.

Vorzugsweise weist die Vorrichtung einen Prozessor und/oder einen Speicher auf. Der Prozessor kann beispielsweise eingerichtet sein, das Verfahren auszuführen. Der Speicher kann beispielsweise eine Datenbankaufweisen. Der Speicher und/oder die Datenbank kann beispielsweise die Datenstrukturen aufweisen, in denen die Konfigurations-Datensätze gespeichert sind.

Die Aufgabe wird durch die Erfindung gemäß einem dritten Aspekt dadurch gelöst, dass ein Verfahren, das vorzugsweise mit einem Verfahren gemäßdem ersten Aspekt der Erfindung zusammenwirkt,
wobei das Verfahren wenigstens einen ersten Konfigurations-Datensatz wenigstens einer Entität empfängt, insbesondere den von dem ersten, zweiten und/oder dritten spezifischen Modul in dem Verfahren gemäß dem ersten Aspekt der Erfindung bereitgestellten spezifischen Konfigurations-Datensatz,
und/oder
wobei das Verfahren wenigstens einen zweiten Konfigurations-Datensatz der Entität bereitstellt, insbesondere den in dem Verfahren gemäß dem ersten Aspekt der Erfindung von Seiten der zweiten Quelle empfangenen temporärer Konfigurations-Datensatz vorgeschlagen wird.

Es wurde erkannt, dass ein Verfahren, das einen ersten und/oder zweiten Konfigurations-Datensatz einer Entität empfangen bzw. bereitstellen kann, besonders zuverlässig für die zentrale Verwaltung von Konfigurations-Datensätzen eingesetzt werden kann. Wenn das Verfahren dabei mit einem Verfahren gemäß dem ersten Aspekt zusammenwirkt, kann so besonders effizient der serverseitige Teil für eine Client-Server-Architektur realisiert werden.

In einer Ausführungsform ist das Verfahren computerimplementiert und läuft vorzugsweise auf einem Server und/oder Cloud-System ab.

Wenn das Verfahren einen ersten Konfigurations-Datensatz empfängt, kann dieser im vorgeschlagenen Verfahren beispielsweise zwischengespeichert, mit weiteren Daten kombiniert, ausgewertet und/oder anderweitig weiterverarbeitet werden.

Wenn das Verfahren einer Entität einen zweiten Konfigurations-Datensatz bereitstellt, so kann dies beispielsweise ein Konfigurations-Datensatz sein, der identisch zu einem früher empfangenen ersten Konfigurations-Datensatz der Entität ist und/oder der ganz oder teilweise auf einem früher empfangenen ersten Konfigurations-Datensatz der Entität basiert. Der zweite Konfigurations-Datensatz kann alternativ oder ergänzend auch auf den Daten von einem oder mehreren ersten und/oder zweiten Konfigurations-Datensätzen von einer oder mehreren Entitäten basieren und/oder diese aufweisen. Ein zweiter Konfigurations-Datensatz kann aber auch unabhängig von den Daten eines ersten Konfigurations-Datensatzes sein. Möglicherweise wurde auch noch kein erster Konfigurations-Datensatz empfangen.

In einer Ausführungsform erfolgt das Empfangen des ersten Konfigurations-Datensatzes zu einem anderen Zeitpunkt, insbesondere früheren oder späteren Zeitpunkt, als das Bereitstellen des zweiten Konfigurations-Datensatzes.

In einer Ausführungsform kann das Verfahren gemäß dem dritten Aspekt der Erfindung die zweite Quelle in dem Verfahren gemäßdem ersten Aspekt der Erfindung darstellen oder aufweisen.

In einer Ausführungsform wird das Verfahren von der zentralen Instanz aus dem ersten Aspekt der Erfindung ausgeführt.

In einer bevorzugten Ausführungsform kann vorgesehen sein, dass das Verfahren ferner aufweist, dass ein oder mehrere Entitäts-Parameter in Bezug auf die Entität von Seiten einer dritten Quelle empfangen werden, und dass vorzugsweise die empfangenen Entitäts-Parameter mit dem empfangenen ersten Konfigurations-Datensatz assoziiert werden.

Die Entitäts-Parameter können Informationen zu Einstellungen, Eigenschaften und Anwendungsfälle der Entität darstellen oder aufweisen.

In einer Ausführungsform stellen die Entitäts-Parameter Parameter zum Anwendungsfall der Entität dar, wie Informationen zu ihrer Nutzungsfrequenz. Entitäts-Parameter können alternativ oder ergänzend Parameter zum Standort der Entität darstellen, wie Informationen zur Umgebungs-Luftfeuchtigkeit. Entitäts-Parameter können auch Merkmale der Entität wie Modell, Version und/oder Baujahr darstellen. Beispielsweise kann ein Entitäts-Parameter eine Benutzungsfrequenz der Entität durch Benutzer (in Benutzer pro Stunde), eine Umgebungs-Luftfeuchtigkeit, oder eine Drehgeschwindigkeit (in Umdrehungen pro Minute) der Entität oder eines Teils davon darstellen. Ein Entitäts-Parameter kann auch ein technischer Platz der Entität (zum Beispiel "2. OG Nord-Gang" und/oder "Raum 123"), einen Betreiber-Ansprechpartner der Entität (insbesondere aufweisend Name und/oder Telefonnummer des Betreibers), Bewegungszyklen der Entität oderTeilen davon pro Stunde und/oder Tag der letzten Wartung der Entität darstellen. Optional ist auch eine beliebige Kombination der genannten Entitäts-Parameter, ggf. mit weiteren Entitäts-Parametern, möglich.

Solche Informationen können beispielsweise in einem Enterprise Resource Planning (ERP)-System zu jeder Entität hinterlegt sein und optional entsprechend auch von dort bezogen werden.

In einer Ausführungsform weist die dritte Quelle ein ERP-System auf oder stellt dieses dar. Damit können alle zu einer Entität in einem solchen ERP-System hinterlegten Informationen in dem vorgeschlagenen Verfahren von der dritten Quelle empfangen werden.

In einer bevorzugten Ausführungsform kann vorgesehen sein, dass das Verfahren ferner aufweist,
dass die empfangenen Entitäts-Parameter mittelseinesProzessierungs-Moduls verarbeitet werden,
wobei das Prozessierungs-Modul aufweist, dass anhand der empfangenen Entitäts-Parameter zumindest ein ausgezeichneter Konfigurations-Datensatz für die Entität, insbesondere basierend auf einer Sammlung von mehreren mit Entitäts-Parametern assoziierten Konfigurations-Datensätzen, ermittelt wird, und vorzugsweise der ausgezeichnete Konfigurations-Datensatz als den zweiten Konfigurations-Datensatz verwendet wird.

Es ist damit besonders effizient möglich, einen ausgezeichneten Konfigurations-Datensatz für eine Entität zu erhalten, indem lediglich Entitäts-Parameter der Entität angegeben werden. So kann beispielsweise der Einsatzzweck einer Entität mittels Angabe entsprechender Entitäts-Parameter definiert werden und anhand des Einsatzzwecks einen passenden, nämlich ausgezeichneten, Konfigurations-Datensatz erhalten werden.

Dabei wird ausgenutzt, dass bereits für mehrere Entitäten eine Kombination von Konfigurations-Datensatz und Entitäts-Parameter als Sammlung bekannt ist. Wenn basierend auf der Sammlung dann der ausgezeichnete Konfigurations-Datensatz ermittelt wird, können die der Sammlung zugrunde liegenden Informationen direkt oder indirekt verwendet werden. Das heißt, auf die einzelnen Daten der einzelnen Konfigurations-Datensätze und Entitäts-Parameter der Entitäten kann direkt zugegriffen werden. Andererseits kann es auch möglich sein, dass diese Informationen nicht bzw. nicht mehr direkt zugänglich sind und dann nur indirekt verfügbar sind, indem beispielsweise auf Daten in weiterverarbeiteter Form zurückgegriffen wird. Die indirekte Verfügbarkeit kann beispielsweise vorliegen, wenn basierend auf den einzelnen von der Sammlung umfassten Konfigurations-Datensätze und Entitäts-ParameterderEntitätenein Datenmodell trainiert wurde.

Das vorgeschlagene Verfahren ermöglicht es damit, basierend auf Informationen zu einer Entität, wie dem Produkttyp, den Entitäts-Eigenschaften und dem Anwendungsfall, der Entität einen individuellen und/oder optimierten Konfigurations-Datensatz bereitzustellen, und diesen optional auch an die Entität zu senden. Dies ist bei Inbetriebnahme einer Entität bezüglich Qualität und Sicherheit sowie Effizient besonders vorteilhaft.

In einer bevorzugten Ausführungsform kann vorgesehen sein, dass das Prozessierungs-Modul aufweist, dass wenigstens eine Korrelation zwischen den empfangenen Entitäts-Parameter und den Entitäts-Parametern der Sammlung durchgeführt wird, und dass aus der Sammlung derjenige Konfigurations-Datensatz als ausgezeichneter Konfigurations-Datensatz verwendet wird, für dessen Entitäts-Parameterdie Korrelation einen maximalen Korrelationswert aufweist,
und/oder
das Prozessierungs-Modul wenigstens ein trainiertes Datenmodell für das maschinelle Lernen aufweist, und vorzugsweise das Datenmodell für das maschinelle Lernen anhand einer Vielzahl von Merkmals-Vektoren und zugehörigen Wahrheits-Vektoren trainiert wurde.

Indem eine Korrelation durchgeführt wird, kann besonders einfach direkt basierend auf derSammlung von Konfigurations-Datensätzen mit jeweils assoziiertem/n Entitäts-Parameter(n) ein ausgezeichneter Konfigurations-Datensatz ermittelt werden.

Indem ein trainiertes Datenmodellfür das maschinelle Lernen eingesetzt wird, konnte ein besonders zuverlässiges Ergebnis für den ausgezeichneten Konfigurations-Datensatz ermittelt werden. Bei dieser indirekt auf der Sammlung von Konfigurations-Datensätzen mit jeweils assoziierten Entitäts-Parameter basierenden Ermittlung des ausgezeichneten Konfigurations-Datensatzes, genügt die Eingabe von gewünschten Entitäts-Parametern, um von dem trainierten Datenmodell den ausgezeichneten Konfigurations-Datensatz zu erhalten. Die Ermittlung des ausgezeichneten Konfigurations-Datensatz erfolgt dabei durch das Datenmodell unter Berücksichtigung aller während des Trainings verwendeten Konfigurations-Datensätzen mit ihren assoziierten Entitäts-Daten. Auch wenn kein direkter Zugriff auf die einzelnen zum Lernen des Datenmodells verwendeten Konfigurations-Datensätze mehr möglich ist, erweisen sich die auf diese Weise erhaltenen ausgezeichneten Konfigurations-Datensätze als für den gewünschten Einsatzzwecksehr zuverlässig geeignet.

In einer Ausführungsform weist das Prozessierungs-Modul einen Entscheidungsbaum oder ein neuronales Netz auf, oder ist daraufgerichtet.

In einer Ausführungsform wird das trainierte Datenmodellfür das maschinelle Lernen in Abhängigkeit des Typs der Entität gewählt. Typen von Entitäten können insbesondere automatische Türanlagen, automatische Toranlagen, automatische Lichtanlagen und/oder automatische Fensteranlagen sein. Beispielsweise wird für denTyp automatischeTüranalage und für den Typautomatische Fensteranlage jeweils ein eigenes trainiertes Datenmodell für das maschinelle Lernen gewählt. Weitere Gliederungen sind möglich, und es kann jeweils ein eigenes trainiertes Datenmodell für das maschinelle Lernen verwendet werden. Etwa für jedes Modell eines Typs, für jede Variante eines Modells und/oder für jede Version einer Variante. Dies macht das eingesetzte trainierte Datenmodell für das maschinelle Lernen jeweils besonders wirkungsvoll.

Der Einsatz eines trainierten Datenmodells für das maschinelle Lernen kann auch deshalb besonders bevorzugt sein, da im Gegensatz zu anderen Maßnahmen dann im Vergleich zu den Konfigurations-Datensätzen der Sammlung auch bisher nicht eingesetzte Konfigurations-Datensätze mittels des trainierten Datenmodells für das maschinelle Lernen erhalten werden können. Denn ein mittels des trainierten Datenmodells ermittelter Konfigurations-Datensatz ist nicht zwingend aufdie dem Training zugrunde liegenden Konfigurations-Datensätze beschränkt. Er kann vielmehr auf dem Zusammenwirken aller assoziierten Konfigurations-Datensätze und Entitäts-Parameter basieren. Das Datenmodell für das maschinelle Lernen "lernt" während dem Training eine Beziehung zwischen den für die Entitäten angegebenen Entitäts-Parametern und dem jeweils assoziierten Konfigurations-Datensatz. So kann das Datenmodell im trainierten Zustand anhand der Eingabe von Entitäts-Parametern einen optimierten Konfigurations-Datensatz vorschlagen. Daher werden zum Training vorzugsweise solche Trainings-Daten verwendet, die einer bevorzugten Konfiguration der Entitäten entsprechend.

In einer Ausführungsform weisen die Merkmals-Vektoren Entitäts-Parameter auf und/oder die zugehörigen Wahrheits-Vektoren weisen die zugehörigen Konfigurations-Datensätze der entsprechenden Entität auf oder repräsentieren diesen.

Damit kann vorliegend mittels "Big Data", also auf Grundlage einer ausreichend großen Datenbasis mit entsprechenden Entitäts-Parametern und Konfigurations-Datensätzen zu Entitäten, optimierte Konfigurations-Datensätze erhalten werden. Beispielsweise kann die Datenbasis Informationen zu mehr als 100, mehr als 1.000, mehr als 5.000 oder mehrals 10.000 Entitäten aufweisen.

Die Aufgabe wird durch die Erfindung gemäß einem vierten Aspekt dadurch gelöst, dass eine Vorrichtung, insbesondere Vorrichtung zur Datenverarbeitung, wobei die Vorrichtung dazu eingerichtet ist, ein Verfahren gemäß dem dritten Aspekt der Erfindung auszuführen vorgeschlagen wird.

Damit kann das Verfahren besonders einfach durchgeführt werden. Beispielsweise kann die Vorrichtung zumindest zeitweise während der Durchführung des Verfahrens mit der Entität und/oder einem Client gekoppelt werden, die bzw. der das Verfahren gemäß dem ersten Aspekt der Erfindung ausführt. Beispielsweise kann die Vorrichtung und die Entität bzw. der Client mittels einer Funkschnittstelle, wie insbesondere Wireless LAN, RFID oder Bluetooth, oder einer Kabelverbindung, wie LAN oder USB, miteinander verbunden werden, so dass beide Daten miteinander austauschen können.

In einer Ausführungsform stellt die Vorrichtung wenigstens ein Computer, insbesondere wenigstens ein Server, ein Computernetzwerk und/oder ein Cloud-System, dar oder weist diese(n/s) auf.

Vorzugsweise weist die Vorrichtung einen Prozessor und/oder einen Speicher auf. Der Prozessor kann beispielsweise eingerichtet sein, das Verfahren auszuführen. Der Speicher kann beispielsweise eine Datenbankaufweisen. Der Speicher und/oder die Datenbank kann beispielsweise die Datenstrukturen aufweisen, in denen die Konfigurations-Datensätze gespeichert sind. Die Vorrichtung kann auch das Prozessierungs-Modul aufweisen.

Die Aufgabe wird durch die Erfindung gemäßeinem fünften Aspekt dadurch gelöst, dass ein Verfahren zum Generieren eines Trainings-Datensatzes, der vorzugsweise zum Trainieren des Datenmodells für das maschinelle Lernen, das von dem Prozessierungs-Modul in einem Verfahren gemäß dem dritten Aspekt der Erfindung umfasst ist, verwendet werden kann oder verwendet wird, das Verfahren aufweisend:
Bereitstellen eines Konfigurations-Datensatzes einer Entität und einen oder mehreren von mit dem Konfigurations-Datensatz und/oder der Entität assoziierten Entitäts-Parameter der Entität, wobei vorzugsweise der Konfigurations-Datensatz als erster Konfigurations-Datensatz und/oder die Entitäts-Parameter in dem Verfahren gemäß dem dritten Aspekt der Erfindung empfangen wurden;
Erstellen eines Merkmals-Vektors, der die Entitäts-Parameter aufweist;
Erstellen eines Wahrheits-Vektors, der den Konfigurations-Datensatz repräsentiert und/oder aufweist; und/oder
Assoziieren des Merkmals-und des Wahrheits-Vektors miteinander;
und
Wiederholen des Vorstehenden für eine Vielzahl von Entitäten, um eine Vielzahl von miteinander assoziierten Merkmals- und Wahrheits-Vektoren zu erhalten, die den Trainings-Datensatz darstellen vorgeschlagen wird.

Es ist überraschend, dass in besonders zuverlässiger Weise etwa in einem Verfahren gemäß dem dritten Aspekt der Erfindung ein ausgezeichneter Konfigurations-Datensatz für die Konfiguration einer Entität mittels eines Datenmodells für das maschinelle Lernen erhalten werden kann, indem das Datenmodell für das maschinelle Lernen auf dem vorgeschlagenen Trainings-Datensatz trainiert wurde.

Daher bietet der vorgeschlagene Trainings-Datensatz eine bevorzugte Basis, um alle Vorteile die oben in Bezug auf die ersten bis vierten Aspekte der Erfindung genannt wurden ausnutzen zu können. Es kann daher auch auf die vorteilhaften Effekte verwiesen werden, die in diesem Zusammenhang dort erörtert wurden.

In einer Ausführungsform werden für den Trainings-Datensatz nur Konfigurations-Datensätze und Entitäts-Parameter bestimmter Entitäten verwendet. Beispielsweise nur in Bezug auf Entitäten eines bestimmten Typs, eines bestimmten Modells eines Typs, einer bestimmten Variante eines Modells und/oder einer bestimmten Version einer Variante. Dies macht den Trainings-Datensatz wirkungsvoller.

In einer Ausführungsform sind der Konfigurations-Datensatzes einer Entität und die Vielzahl von mit dem Konfigurations-Datensatz und/oder der Entität assoziierten Entitäts-Parameter aus der Sammlung der mehreren mit Entitäts-Parametern assoziierten Konfigurations-Datensätzen gemäß dem dritten Aspekt der Erfindung.

Die Aufgabe wird durch die Erfindung gemäß einem sechsten Aspekt dadurch gelöst, dass ein Verfahren zum Trainieren eines Datenmodells für das maschinelle Lernen, vorzugsweise zum Trainieren des Datenmodells für das maschinelle Lernen des Prozessierungs-Moduls in einem Verfahren gemäß dem dritten Aspekt der Erfindung, wobei das Verfahren aufweist:
Bereitstellen eines Trainings-Datensatzes, der eine Vielzahl von miteinander assoziierten Merkmals-Vektoren und Wahrheits-Vektoren aufweist, wobei vorzugsweise derTrainings-Datensatz mittelseines Verfahrens gemäß dem fünften Aspekt der Erfindung generiert wird oder werden kann;
Registrieren des Eingangs des Datenmodells für das maschinelle Lernen mit einem Merkmals-Vektor des Trainings-Datensatzes;
Berechnen des Datenmodells für das maschinelle Lernen vom Eingang zum Ausgang;
Vergleichen des Ausgangs des Datenmodells für das maschinelle Lernen mit dem mit dem Merkmals-Vektor assoziierten Wahrheits-Vektor und Bestimmen eines Fehler-Vektors zwischen den beiden; und/oder
Anpassen des Datenmodells für das maschinelle Lernen basierend aufdem bestimmten Fehler-Vektor;
und
Wiederholen des Vorstehenden für alle anderen Merkmals-Vektoren und assoziierten Wahrheits-Vektoren des Trainings-Datensatzes vorgeschlagen wird.

Es ist überraschend, dass in besonders zuverlässiger Weise etwa in einem Verfahren gemäß dem dritten Aspekt der Erfindung ein ausgezeichneter Konfigurations-Datensatz für die Konfiguration einer Entität mittels eines Datenmodells für das maschinelle Lernen erhalten werden kann, indem das Datenmodell für das maschinelle Lernen auf die vorgeschlagene Weise trainiert wurde.

Daher bietet das vorgeschlagene Trainings-Verfahren eine bevorzugte Basis, um alle Vorteile die oben in Bezug auf die ersten bis vierten Aspekte der Erfindung genannt wurden ausnutzen zu können. Es kann daher auch auf die vorteilhaften Effekte verwiesen werden, die in diesem Zusammenhang dort erörtert wurden.

Die Aufgabe wird durch die Erfindung gemäß einem siebenten Aspekt dadurch gelöst, dass ein Computerprogrammprodukt, umfassend Befehle, die bei der Ausführung des Programms durch eine Vorrichtung zur Datenverarbeitung, insbesondere die Vorrichtung gemäß dem zweiten Aspekt der Erfindung und/oder gemäß dem vierten Aspekt der Erfindung, diese veranlassen, das Verfahren gemäß dem ersten Aspekt der Erfindung und/oder gemäß dem dritten Aspekt der Erfindung auszuführen vorgeschlagen wird.

Ein Computerprogrammprodukt kann beispielsweise als CD, DVD, ROM/RAM, Blue-Ray-Disc, USB-Speicher, SSD-Speicher, magnetische Festplatte, und/oder dergleichen ausgestaltet sein. Ein Computerprogrammprodukt kann alternativ oder ergänzend auch als, vorzugsweise auf einem computerlesbaren Medium abgespeicherte oder abspeicherbare, Datei ausgestaltet sein. Die Datei kann dann beispielsweise, insbesondere auf einer Vorrichtung zur Datenverarbeitung, ausführbar sein, um das Verfahren ausführen zu können.

Vorzugsweise wird dabei das Verfahren gemäß dem ersten Aspekt der Erfindung durch die Vorrichtung gemäß dem zweiten Aspekt der Erfindung und/oder das Verfahren gemäß dem dritten Aspekt der Erfindung durch die Vorrichtung gemäßdem vierten Aspekt der Erfindung ausgeführt.

Die Aufgabe wird durch die Erfindung gemäß einem achten Aspekt dadurch gelöst, dass eine Signalfolge, repräsentierend Befehle, die, wenn sie auf einer Vorrichtung zur Datenverarbeitung, insbesondere die Vorrichtunggemäßdem zweiten Aspekt der Erfindung und/oder gemäßdem vierten Aspekt der Erfindung, ausgeführt werden, die Vorrichtung veranlassen, das Verfahren gemäß dem ersten Aspekt der Erfindung und/oder gemäß dem dritten Aspekt der Erfindung auszuführen vorgeschlagen wird.

Die Signalfolge kann beispielsweise über ein Computernetzwerk, wie dem Internet, übertragbar sein. Beispielsweise kann die Signalfolge das Computerprogrammprodukt repräsentieren, insbesondere als aus dem Computernetzwerk herunterladbare Datei.

Vorzugsweise wird dabei das Verfahren gemäß dem ersten Aspekt der Erfindung durch die Vorrichtung gemäß dem zweiten Aspekt der Erfindung und/oder das Verfahren gemäß dem dritten Aspekt der Erfindung durch die Vorrichtung gemäßdem vierten Aspekt der Erfindung ausgeführt.

### Kurze Beschreibung der Zeichnungen

Weitere Merkmale und Vorteile der Erfindung ergeben sich aus der nachfolgenden Beschreibung, in der bevorzugte Ausführungsformen der Erfindung anhand schematischer Zeichnungen erläutert werden.

Dabei zeigen:
- Fig. 1: ein Ablaufdiagramm eines Verfahrens gemäßdem erstenAspekt der Erfindung in einer ersten Ausgestaltung;
- Fig. 2: eine Vorrichtung gemäß dem zweiten Aspekt der Erfindung;
- Fig. 3: ein Ablaufdiagramm eines Verfahrens gemäß dem ersten Aspekt der Erfindung in einer zweiten Ausgestaltung;
- Fig. 4: eine Vorrichtung gemäß dem zweiten Aspekt der Erfindung;
- Fig. 5: ein Ablaufdiagramm eines Verfahrens gemäß dem ersten Aspekt der Erfindung in einer dritten Ausgestaltung;
- Fig. 6: eine Vorrichtung gemäßdem zweiten Aspekt der Erfindung;
- Fig. 7: ein Ablaufdiagramm eines Verfahrens gemäßdem dritten Aspekt der Erfindung;
- Fig. 8: eine Vorrichtung gemäßdem vierten Aspekt der Erfindung;
- Fig. 9a: ein System aus mehreren Teilnehmern in einer ersten Situation; und
- Fig. 9b: ein System aus mehreren Teilnehmern in einer zweiten Situation;

### Beschreibung der Ausführungsformen

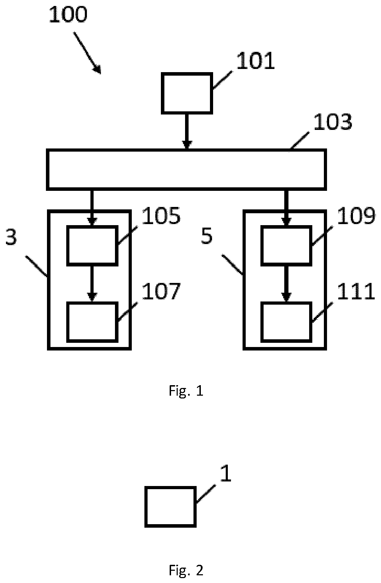

Fig. 1 zeigt ein Ablaufdiagramm 100 eines Verfahrens gemäßdem ersten Aspekt der Erfindung in einer ersten Ausgestaltung.

Fig. 2 zeigt eine Vorrichtung 1, die als Smartphone ausgestaltet ist und als Client auftritt. Die Vorrichtung 1 ist dazu eingerichtet das Verfahren gemäß dem ersten Aspekt der Erfindung in der ersten Ausgestaltung auszuführen. Die Vorrichtung 1 ist eine Vorrichtung gemäß dem zweiten Aspekt der Erfindung.

In 101 wird das Eintreten eines spezifischen Ereignisses in Bezug auf einen bestehenden Konfigurations-Datensatz einer Entität überwacht.

Die Entität ist vorliegend eine automatische Türanlage, deren Steuereinheit mit dem bestehenden Konfigurations-Datensatz konfiguriert wurde.

In 103 wird der Eintritt eines spezifischen Ereignisses während des Überwachens festgestellt und in Abhängigkeit des festgestellten spezifischen Ereignisses ein spezifisches Modul ausgewählt und/oder ausgeführt.

Im Rahmen einer Anpassung der Konfiguration der Entität werden durch einen Benutzer über eine Bildschirmtastatur des Clients 1 zu einem ersten spezifischen Zeitpunkt Daten zum Aktualisieren der von dem bestehenden Konfigurations-Datensatz umfassten Daten eingegeben. Diese werden zu dem ersten spezifischen Zeitpunkt empfangen und damit verbunden wird in 103 ein erstes spezifisches Ereignis festgestellt.

Entsprechend wird in 103 ein erstes spezifisches Modul 3 ausgewählt und ausgeführt.

In 105 wird dann ein spezifischer Konfigurations-Datensatz aufgebaut. Dazu wird der bestehende Konfigurations-Datensatz als Grundlage verwendet und in diesem diejenigen Daten ersetzt, welche von der Bildschirmtastatur als erste Quelle empfangen wurden. Dieser spezifische Konfigurations-Datensatz wird in 107 an die Entität und an eine zentrale Instanz gesendet. Damit liegen an zwei Orten, nämlich sowohl auf Seiten der Entität als auch auf Seiten der zentralen Instanz der spezifische Konfigurations-Datensatz vor.

Die Entität kann dann mit dem spezifischen Konfigurations-Datensatz konfiguriert werden, wodurch dieser vorzugsweise zum bestehenden Konfigurations-Datensatz wird.

Im Rahmen des Austauschs der Steuereinheit der Entität wird zu einem auf den ersten spezifischen Zeitpunkt folgenden zweiten spezifischen Zeitpunkt von dem Client 1 ein Eingabesignal mit einem bestimmten Wert erzeugt, das als erster Indikator zu dem zweiten spezifischen Zeitpunkt in 103 ausgewertet wird. Da ein ausgezeichneter Wert des ersten Indikators ermittelt wird, wird in 103 ein zweites spezifisches Ereignis festgestellt.

Entsprechend wird in 103 ein zweites spezifische Modul 5 ausgewählt und ausgeführt.

In 109 wird dann ein temporärer Konfigurations-Datensatz von Seiten derzentralen Instanz als zweite Quelle empfangen. Aufgrund der Kenntnis der zweiten Quelle steht vorliegend fest, dass der temporäre Konfigurations-Datensatz dabei einem früheren Konfigurations-Datensatz der Entität entspricht, der zuvor an die zentrale Instanz gesendet wurde. Vorliegend handelt es sich genau genommen um denjenigen Konfigurations-Datensatz, der in 107 an die zentrale Instanz gesendet wurde. Der spezifische Konfigurations-Datensatz wird in 109 aufgebaut, indem der temporäre Konfigurations-Datensatz als spezifischer Konfigurations-Datensatz verwendet wird. Dieser wird dann in 111 an die Entität gesendet.

Dadurch ist der Austausch der Steuereinheit der Entität besonders einfach und zuverlässig möglich, da der Konfigurations-Datensatz als Sicherungskopie von Seiten der zentralen Instanz bezogen und der Entität wieder bereitgestellt werden kann.

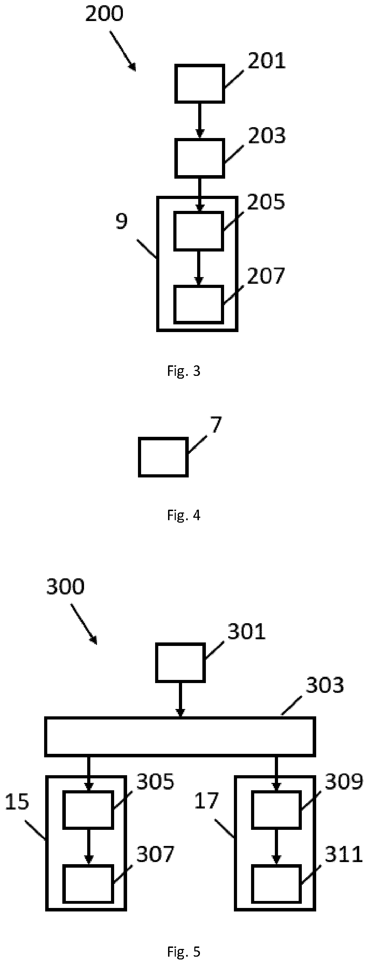

Fig. 3 zeigt ein Ablaufdiagramm 200 eines Verfahrens gemäßdem ersten Aspekt der Erfindung in einer zweiten Ausgestaltung.

Fig. 4 zeigt eine Vorrichtung 7, die als Smartphone ausgestaltet ist und als Client auftritt. Die Vorrichtung 7 ist dazu eingerichtet das Verfahren gemäß dem ersten Aspekt der Erfindung in der zweiten Ausgestaltung auszuführen. Die Vorrichtung 7 ist eine Vorrichtung gemäß dem zweiten Aspekt der Erfindung.

In 201 wird das Eintreten eines spezifischen Ereignisses in Bezug auf einen bestehenden Konfigurations-Datensatz einer Entität überwacht.

Die Entität ist vorliegend eine automatische Türanlage, deren Steuereinheit mit dem bestehenden Konfigurations-Datensatz konfiguriert wurde.

In 203 wird der Eintritt eines spezifischen Ereignisses während des Überwachens festgestellt und in Abhängigkeit des festgestellten spezifischen Ereignisses ein spezifisches Modul ausgewählt und/oder ausgeführt.

Zu einem Zeitpunkt, der ein zweiter spezifischer Zeitpunkt darstellt, wird im Rahmen einer Wartungsarbeit der Entität ein Vergleich zwischen dem bestehenden Konfigurations-Datensatz und einem ersten Referenz-Konfigurations-Datensatzdurchgeführt. Der erste Referenz-Konfigurations-Datensatz entspricht einem auf Seiten der zentralen Instanz für die Entität verfügbaren aktuellsten Konfigurations-Datensatz. Bei dem Vergleich wird festgestellt, dass die beiden Datensätze nicht identisch sind. Mithin, ist die Konfiguration der Entität nicht aktuell. Der Vergleich wird als erster Indikator ausgewertet und aufgrund der Ungleichheit beider Datensätze wird ein ausgezeichneter Wert des ersten Indikators ermittelt. Da ein ausgezeichneter Wert des ersten Indikators ermittelt wird, wird in 203 ein zweites spezifisches Ereignis festgestellt.

Entsprechend wird in 203 ein zweites spezifisches Modul 9 ausgewählt und ausgeführt.

In 205 wird dann ein temporärer Konfigurations-Datensatz von derzentralen Instanz als zweite Quelle empfangen. Aufgrund der Kenntnis der zweiten Quelle steht vorliegend fest, dass der temporäre Konfigurations-Datensatz dabei dem aktuellsten Konfigurations-Datensatz entspricht. Der spezifische Konfigurations-Datensatz wird in 205 aufgebaut, indem der temporäre Konfigurations-Datensatz als spezifischer Konfigurations-Datensatz verwendet wird. Dieser spezifische Konfigurations-Datensatz wird dann in 207 der Entität bereitgestellt. Dadurch bleibt deren Konfiguration auf dem aktuellen Stand.

Fig. 5 zeigt ein Ablaufdiagramm 300 eines Verfahrens gemäßdem ersten Aspekt der Erfindung in einer dritten Ausgestaltung.

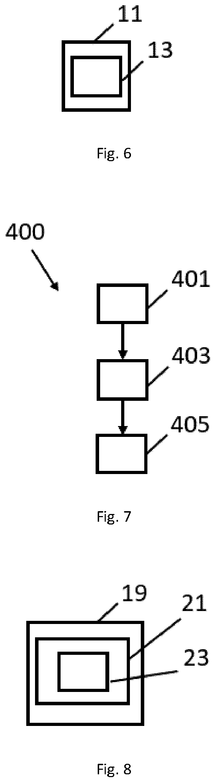

Fig. 6 zeigt eine Entität 11, die als automatische Türanlage ausgestaltet ist, und eine Steuereinheit 13 aufweist. Die Steuereinheit 13 der Entität 11 ist dazu eingerichtet, das Verfahren gemäß dem ersten Aspekt der Erfindung in der dritten Ausgestaltung auszuführen. Die Steuereinheit 13 ist eine Vorrichtung gemäß dem zweiten Aspekt der Erfindung.

In 301 wird das Eintreten eines spezifischen Ereignisses in Bezug auf einen bestehenden Konfigurations-Datensatz der Entität 11 überwacht.

Die Entität 11 bzw. deren Steuereinheit 13 wurde mit dem bestehenden Konfigurations-Datensatz konfiguriert.

In 303 wird der Eintritt eines spezifischen Ereignisses während des Überwachens festgestellt und in Abhängigkeit des festgestellten spezifischen Ereignisses ein spezifisches Modul ausgewählt und/oder ausgeführt.

Im Rahmen einer Anpassung der Konfiguration der Entität 11 werden zu einem ersten spezifischen Zeitpunkt Daten zum Aktualisieren der von dem bestehenden Konfigurations-Datensatz umfassten Daten von der Steuereinheit 13 empfangen. Damit verbunden wird in 303 ein erstes spezifisches Ereignis festgestellt.

Entsprechend wird in 303 ein erstes spezifisches Modul 15 ausgewählt und ausgeführt.

In 305 wird dann ein spezifischer Konfigurations-Datensatz aufgebaut. Dazu wird der bestehende Konfigurations-Datensatz als Grundlage verwendet und in diesem diejenigen Daten ersetzt, welche von der ersten Quelle wie beispielsweise einem mit der Steuereinheit 13 verbundenen Client empfangen wurden. Dieser spezifische Konfigurations-Datensatz wird in 307 an eine zentrale Instanz gesendet. Damit liegt eine Kopie des spezifischen Konfigurations-Datensatzes auch der zentralen Instanz vor.

Die Entität kann dann mit dem spezifischen Konfigurations-Datensatz konfiguriert werden, wodurch dieser vorzugsweise zum bestehenden Konfigurations-Datensatz wird.

Im Rahmen des Austauschs der Steuereinheit 13 der Entität 11 wird zu einem auf den ersten spezifischen Zeitpunkt folgenden zweiten spezifischen Zeitpunkt von der Steuereinheit 13 ein Eingabesignal mit einem bestimmten Wert erzeugt, das als ein erster Indikator zu dem zweiten spezifischen Zeitpunkt in 303 ausgewertet wird. Da ein ausgezeichneter Wert des ersten Indikators ermittelt wird, wird in 303 ein zweites spezifisches Ereignis festgestellt.

Entsprechend wird in 303 ein zweites spezifische Modul 17 ausgewählt und ausgeführt.

In 309 wird dann ein temporärer Konfigurations-Datensatz von derzentralen Instanz als zweiteQuelle empfangen. Aufgrund der Kenntnis der zweiten Quelle steht vorliegend fest, dass der temporäre Konfigurations-Datensatz dabei einem früheren Konfigurations-Datensatz der Entität entspricht, der an die zentrale Instanz gesendet wurde. Vorliegend handelt es sich genau genommen um denjenigen Konfigurations-Datensatz, der in 307 an die zentrale Instanz gesendet wurde. Der spezifische Konfigurations-Datensatz wird in 309 aufgebaut, indem der temporäre Konfigurations-Datensatz als spezifischer Konfigurations-Datensatz verwendet wird. Dieser spezifische Konfigurations-Datensatz wird dann der Entität 11 bzw. der Steuereinheit 13 in 311 bereitgestellt.

Dadurch ist der Austausch der Steuereinheit 13 der Entität 11 besonders einfach und zuverlässig möglich, da der Konfigurations-Datensatz als Sicherungskopie von Seiten der zentralen Instanz bezogen und der Steuereinheit 13 bereitgestellt werden kann.

Fig. 7 zeigt ein Ablaufdiagramm 400 eines Verfahrens gemäßdem dritten Aspekt der Erfindung.

Fig. 8 zeigt eine Vorrichtung 19, die als Server ausgestaltet ist. Die Vorrichtung 19 ist dazu eingerichtet das Verfahren gemäß dem dritten Aspekt der Erfindung auszuführen. Die Vorrichtung 19 ist eine Vorrichtung gemäß dem vierten Aspekt der Erfindung.

In 401 werden Entitäts-Parameter einer Entität von einer dritten Quelle empfangen. Die dritte Quelle ist vorliegend ein ERP-System, in dem zu jeder verwalteten Entität Entitäts-Parameter betreffend den Standort, den Einsatzzweck und den Qualitätsverlauf der Entität hinterlegt sind.

In 403 werden die empfangenen Entitäts-Parameter mittels eines von der Vorrichtung 19 aufgewiesenen Prozessierungs-Moduls 21 verarbeitet. Das Prozessierungs-Modul 19 weist ein trainiertes Datenmodell für das maschinelle Lernen 23 auf. Dieses wurde anhand einer Vielzahl von Merkmals-Vektoren und zugehörigen Wahrheits-Vektoren trainiert. Ein Merkmals-Vektor weist dabei die Entitäts-Parameter einer Entität auf und der zugehörige Wahrheitsvektor weist einen mit diesen Entitäts-Parametern assoziierten Konfigurations-Datensatz der Entität auf oder repräsentiert diesen. Aus den empfangenen Entitäts-Parametern wird daher in 403 ein Eingangsvektor gebildet und dem trainierten Datenmodell für das maschinelle Lernen 23 zugeführt. Das trainierte Datenmodell für das maschinelle Lernen 23 liefert daraufhin einen ausgezeichneten Konfigurations-Datensatz.

In 405 wird dieser als zweiter Konfigurations-Datensatz bereitgestellt.

Dadurch kann einer Entität anhand vorgegebener Entitäts-Parameter ein optimaler Konfigurations-Datensatz bereitgestellt werden. So könnte in den vorherigen Ausführungsformen grundsätzlich der von Seiten der zentralen Instanz empfangene Konfigurations-Datensatz ein solcher optimierter Konfigurations-Datensatz sein, anstelle eines früheren Konfigurations-Datensatz der Entität.

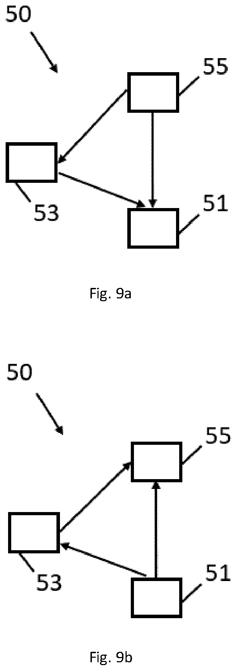

Fig. 9a und 9b zeigen beide ein System 50 aus mehreren Teilnehmern in einer ersten bzw. zweiten Situation, und illustriert damit mögliche Interaktionen zwischen den Teilnehmern gemäß den verschiedenen Aspekten der Erfindung.

Die Teilnehmer sind eine Entität 51, ein Client 53 und ein Server 55. Alle Teilnehmer 51-55 stehen miteinander in Kommunikation und können jeweils über einen Kommunikationskanal Daten miteinander austauschen. Die Verbindungspfeile zwischen den Teilnehmern deutet dabei die momentane Kommunikationsrichtung an. Optional kann der Server 55 noch mit einem nicht dargestellten ERP-System in Kommunikation stehen.

Die Entität 51 und der Client 53 sind jeweils dazu eingerichtet, ein Verfahren gemäß dem ersten Aspekt der Erfindung auszuführen. Der Server 55 ist dazu eingerichtet, ein Verfahren gemäß dem dritten Aspekt der Erfindung auszuführen. Die Entität 51 kann beispielsweise eine automatische Türanlage sein. DerClient 53 kann beispielsweise ein Smartphone sein, oder eine mobile Anwendung (APP) auf dem Smartphone.

Die Entität 51 und der Client 53 stehen über Bluetooth miteinander in Kommunikation. Die Entität 51 und der Server 55 stehen über eine IP-Verbindung, etwa über das Internet, miteinander in Kommunikation. Der Client 53 und der Server 55 stehen ebenfalls über eine IP-Verbindung, etwa über das Internet, miteinander in Kommunikation.

In der ersten Situation, die das Verfahren im Rahmen eines zweiten spezifischen Ereignisses darstellen kann, empfängt der Client 53 von Seiten des Servers 55 einen auf Serverseite hinterlegten Konfigurations-Datensatz, den derClient 53 als spezifischen Konfigurations-Datensatz an die Entität 51 sendet. Alternativ oder ergänzend kann die Entität 51 auch direkt von dem Server 55 den dort hinterlegten Konfigurations-Datensatz als temporären Konfigurations-Datensatz empfangen und ihn sich dort als spezifischen Konfigurations-Datensatz selbst bereitstellen.

In der zweiten Situation, die das Verfahren im Rahmen eines dritten spezifischen Ereignisses darstellen kann, empfängt der Client 53 den bestehenden Konfigurations-Datensatz von der Entität 51 und sendet ihn spezifischen Konfigurations-Datensatz an den Server 55. Alternativ oder ergänzend kann die Entität 51 auch direkt den bestehenden Konfigurations-Datensatz als spezifischen Konfigurations-Datensatz an den Server 55 senden.

Die einzelnen Verfahren und ihre Ausführungsformen wurden vorstehend anhand von Vorrichtungen erläutert, die jeweils dazu eingerichtet sind, das entsprechende Verfahren auszuführen. Es versteht sich von selbst, dass die Erläuterungen abergleichermaßen auch für die isolierten Verfahren gelten.

Die in der vorangehenden Beschreibung, in den Zeichnungen und in den Ansprüchen offenbarten Merkmale können sowohl einzeln als auch in beliebiger Kombination wesentlich für die Erfindung in ihren verschiedenen Ausführungsformen sein.

### Bezugszeichenliste

- 1: Vorrichtung
- 3: Modul
- 5: Modul
- 7: Vorrichtung
- 9: Modul
- 11: Entität
- 13: Steuereinheit
- 15: Modul
- 17: Modul
- 19: Vorrichtung
- 21: Prozessierungs-Modul
- 23: Trainierte Datenmodell für das maschinelle Lernen
- 50: System
- 51: Entität
- 53: Client
- 55: Server
- 100: Ablaufdiagramm
- 101: Überwachen
- 103: Modul auswählen und ausführen
- 105: Aufbauen spezifischer Konfigurations-Datensatz
- 107: Senden spezifischer Konfigurations-Datensatz
- 109: Empfangen temporärer Konfigurations-Datensatz
- 111: Senden spezifischer Konfigurations-Datensatz
- 200: Ablaufdiagramm
- 201: Überwachen
- 203: Modul auswählen und ausführen
- 205: Empfangen temporärer Konfigurations-Datensatz
- 207: Bereitstellen spezifischer Konfigurations-Datensatz
- 300: Ablaufdiagramm
- 301: Überwachen
- 303: Modul auswählen und ausführen
- 305: Aufbauen spezifischer Konfigurations-Datensatz
- 307: Senden spezifischer Konfigurations-Datensatz
- 309: Empfangen temporärer Konfigurations-Datensatz
- 311: Bereitstellen spezifischer Konfigurations-Datensatz
- 400: Ablaufdiagramm
- 401: Empfangen von Entitäts-Parametern
- 403: Verarbeiten der Entitäts-Parameter
- 405: Bereitstellen zweiter Konfigurations-Datensatz

## Patentansprüche

1. Verfahren zum Bereitstellen eines spezifischen Konfigurations-Datensatzes einer Entität, wobei das Verfahren aufweist:
Überwachen des Eintretens wenigstens eines spezifischen Ereignisses in Bezug auf einen bestehenden Konfigurations-Datensatz der Entität, und dass, wenn das Eintreten eines spezifischen Ereignisses festgestellt wird, in Abhängigkeit des festgestellten spezifischen Ereignisses ein spezifisches Modul ausgewählt und/oder ausgeführt wird,
wobei das spezifische Modul jeweils wenigstens aufweist,
dass der spezifische Konfigurations-Datensatz aufgebaut wird und zumindest ein von Seiten wenigstens einer Quelle empfangenes Datum und/oder zumindest ein aus dem bestehenden Konfigurations-Datensatz übernommenes Datum aufweist, und
dass der spezifische Konfigurations-Datensatz einerzentralen Instanz und/oder der Entität bereitgestellt wird;
wobei die Entität eine automatische Türanlage, eine automatische Toranlage, eine automatische Fensteranlage und/oder eine automatische Lichtanlage aufweist und/oder darstellt.

2. Verfahren nach Anspruch 1, wobei das Verfahren ferner aufweist,
dass Daten zum Aktualisieren und/oder Ergänzen der von dem bestehenden Konfigurations-Datensatz umfassten Daten von Seiten einer ersten Quelle empfangen und/oder verarbeitet werden, und damit verbunden ein erstes spezifisches Ereignis eintritt und festgestellt wird und ein erstes spezifisches Modul ausgewählt bzw. ausgeführt wird,
wobei das erste spezifische Modul aufweist,
dass der spezifische Konfigurations-Datensatz zumindest die von Seiten der ersten Quelle empfangenen Daten aufweist, und insbesondere der spezifische Konfigurations-Datensatz an die zentrale Instanz und/oder die Entität gesendet wird,
wobei vorzugsweise der spezifische Konfigurations-Datensatz aus dem bestehenden Konfigurations-Datensatzes aufgebaut wird, indem einzelne in dem bestehenden Konfigurations-Datensatz bestehende Daten durch die empfangenen Daten ersetzt werden und/oder der spezifische Konfigurations-Datensatz aufgebaut wird, indem die empfangenen Daten mit weiteren Daten des bestehenden Konfigurations-Datensatzes, insbesondere denjenigen Daten des bestehenden Konfigurations-Datensatzes, für welche keine aktualisierten Daten empfangen wurden, kombiniert werden.

3. Verfahren nach einem dervorangehenden Ansprüche, wobei das Verfahren ferner aufweist,
dass ein erster Indikator ausgewertet wird und wenn ein ausgezeichneter Wert des ersten Indikators ermittelt wird, ein zweites spezifisches Ereignis eintritt und festgestellt wird und ein zweites spezifisches Modul ausgewählt bzw. ausgeführt wird,
wobei das zweite spezifische Modul aufweist,
dass ein temporärer Konfigurations-Datensatz von Seiten einer zweiten Quelle empfangen wird, insbesondere von Seiten der zentralen Instanz empfangen und/oder aus einem Speicher abgerufen wird,
und basierend auf dem temporären Konfigurations-Datensatz der spezifische Konfigurations-Datensatz aufgebaut wird, insbesondere der temporäre Konfigurations-Datensatz als der spezifische Konfigurations-Datensatz verwendet wird, und insbesondere der spezifische Konfigurations-Datensatz an die zentrale Instanz und/oder die Entität gesendet wird.

4. Verfahren nach einem dervorangehenden Ansprüche, wobei das Verfahren ferner aufweist,
dass ein zweiter Indikator ausgewertet wird und wenn ein ausgezeichneter Wert des zweiten Indikators ermittelt wird, ein drittes spezifisches Ereignis eintritt und festgestellt wird und ein drittes spezifisches Modul ausgewählt bzw. ausgeführt wird,
wobei das dritte spezifische Modul aufweist,
dass basierend auf dem bestehenden Konfigurations-Datensatz der spezifische Konfigurations-Datensatz aufgebaut wird, insbesondere der bestehende Konfigurations-Datensatz als der spezifische Konfigurations-Datensatz verwendet wird, und insbesondere der spezifische Konfigurations-Datensatz an die zentrale Instanz und/oder die Entität gesendet wird,
wobei vorzugsweise der bestehende Konfigurations-Datensatz von Seiten einer dritten Quelle empfangen wird, insbesondere von Seiten der Entität empfangen und/oder aus einem Speicher abgerufen wird.

5. Verfahren nach Anspruch 3 oder Anspruch 4, wobei
(i) das Auswerten des ersten Indikators aufweist,
dass ein Vergleich zwischen dem bestehenden Konfigurations-Datensatz und einem ersten Referenz-Konfigurations-Datensatz durchgeführt wird, und wenn der Vergleich ergibt, dass der bestehende Konfigurations-Datensatz dem ersten Referenz-Konfigurations-Datensatz entspricht oder nicht entspricht, der erste Indikator den ausgezeichneten Wert annimmt,
und/oder
dass ein empfangenes Eingabesignal und/oder ein Flag, insbesondere ein von dem bestehenden Konfigurations-Datensatz umfasstes Flag, ausgewertet wird, und wenn das Eingabesignal bzw. das Flag einen bestimmten Wert aufweist, der erste Indikator den ausgezeichneten Wert annimmt,
wobei vorzugsweise das Eingabesignal bzw. der Flag den bestimmten Wert aufweist, wenn die Entität einem ersten Entitäts-Zustand, insbesondere einem nicht oder nicht vollständig konfigurierten Entitäts-Zustand, entspricht.
und/oder
(ii) das Auswerten des zweiten Indikators aufweist,
dass ein Vergleich zwischen dem bestehenden Konfigurations-Datensatz und einem zweiten Referenz-Konfigurations-Datensatz durchgeführt wird, und wenn der Vergleich ergibt, dass der bestehende Konfigurations-Datensatz dem zweiten Referenz-Konfigurations-Datensatz nicht entspricht, der zweite Indikator den ausgezeichneten Wert annimmt,
und/oder
dass ein empfangenes Eingabesignal und/oder ein Flag, insbesondere ein von dem bestehenden Konfigurations-Datensatz umfasstes Flag, ausgewertet wird, und wenn das Eingabesignal bzw. das Flag einen bestimmten Wert aufweist, der zweite Indikator den ausgezeichneten Wert annimmt,
wobei jeweils vorzugsweise der Vergleich zwischen dem bestehenden Konfigurations-Datensatz und dem Referenz-Konfigurations-Datensatz durchgeführt wird, indem Hash-Werte beider Datensätze miteinander vergleichen werden, wobei vorzugsweise der Hash-Wert des Referenz-Konfigurations-Datensatz von Seiten der zentralen Instanz empfangen und/oder aus einem Speicher abgerufen wird und/oder der Hash-Wert des bestehenden Konfigurations-Datensatz von der Entität, derzentralen Instanz und/oder aus einem Speicher empfangen wird und/oder mittels einer Rechenvorschrift berechnet wird.

6. Verfahren nach einem dervorangehenden Ansprüche,
wobei das Verfahren, insbesondere wenigstens eines der spezifischen Module, ferner aufweist, dass (i) der spezifische Konfigurations-Datensatz in einem lokalen Speicher gespeichert wird und/oder (ii) der bestehende Konfigurations-Datensatz, der erste Referenz-Konfigurations-Datensatz und/oder der zweite Referenz-Konfigurations-Datensatz, insbesondere aus einem lokalen Speicher, von Seiten der Entität und/oder von Seiten der zentralen Instanz, empfangen wird;
wobei das Verfahren computerimplementiert ist;
wobei das Verfahren von der Entität ausgeführt wird;
wobei das Verfahren von einem Client ausgeführt wird;
und/oder
wobei der bestehende Konfigurations-Datensatz wenigstens einen, vorzugsweise persistent in dem bestehenden Datensatz hinterlegten und/oder mit ihm assoziierten, Identifiziererder Entität aufweist.

7. Vorrichtung, insbesondere Vorrichtung zur Datenverarbeitung, wobei die Vorrichtung dazu eingerichtet ist, das Verfahren nach einem der vorangehenden Ansprüche auszuführen.

8. Verfahren, das vorzugsweise mit dem Verfahren nach einem der Ansprüche 1-6 zusammenwirkt,
wobei das Verfahren wenigstens einen ersten Konfigurations-Datensatz wenigstens einer Entität empfängt, insbesondere den von dem ersten, zweiten und/oder dritten spezifischen Modul in dem Verfahren nach einem der Ansprüche 1-6 bereitgestellten spezifischen Konfigurations-Datensatz,
und/oder
wobei das Verfahren wenigstens einen zweiten Konfigurations-Datensatz der Entität bereitstellt, insbesondere den in dem Verfahren nach einem der Ansprüche 1-6 von Seiten der zweiten Quelle empfangenen temporärer Konfigurations-Datensatz.

9. Verfahren nach Anspruch 8, wobei das Verfahren ferner aufweist,
dass ein oder mehrere Entitäts-Parameter in Bezug auf die Entität von Seiten einer dritten Quelle empfangen werden, und dass vorzugsweise die empfangenen Entitäts-Parameter mit dem empfangenen ersten Konfigurations-Datensatz assoziiert werden.

10. Verfahren nach Anspruch 9, wobei das Verfahren ferner aufweist,
dass die empfangenen Entitäts-Parameter mittels eines Prozessierungs-Moduls verarbeitet werden,
wobei das Prozessierungs-Modul aufweist, dass anhand der empfangenen Entitäts-Parameter zumindest ein ausgezeichneter Konfigurations-Datensatz für die Entität, insbesondere basierend auf einer Sammlung von mehreren mit Entitäts-Parametern assoziierten Konfigurations-Datensätzen, ermittelt wird, und vorzugsweise der ausgezeichnete Konfigurations-Datensatz als den zweiten Konfigurations-Datensatz verwendet wird.

11. Verfahren nach Anspruch 10, wobei
das Prozessierungs-Modul aufweist, dass wenigstens eine Korrelation zwischen den empfangenen Entitäts-Parameter und den Entitäts-Parametern der Sammlung durchgeführt wird, und dass aus der Sammlung derjenige Konfigurations-Datensatz als ausgezeichneter Konfigurations-Datensatz verwendet wird, für dessen Entitäts-Parameter die Korrelation einen maximalen Korrelationswert aufweist,
und/oder
das Prozessierungs-Modul wenigstens ein trainiertes Datenmodell für das maschinelle Lernen aufweist, und vorzugsweise das Datenmodell für das maschinelle Lernen anhand einer Vielzahl von Merkmals-Vektoren und zugehörigen Wahrheits-Vektoren trainiert wurde.

12. Vorrichtung, insbesondere Vorrichtung zur Datenverarbeitung, wobei die Vorrichtung dazu eingerichtet ist, das Verfahren nach einem der vorangehenden Ansprüche 8 bis 11 auszuführen.

13. Verfahren zum Generieren eines Trainings-Datensatzes, der vorzugsweise zum Trainieren des Datenmodells für das maschinelle Lernen, das von dem Prozessierungs-Modul in dem Verfahren nach Anspruch 11 umfasst ist, verwendet werden kann oder verwendet wird, das Verfahren aufweisend:
Bereitstellen eines Konfigurations-Datensatzes einer Entität und einen oder mehreren von mit dem Konfigurations-Datensatz und/oder der Entität assoziierten Entitäts-Parameter der Entität, wobei vorzugsweise der Konfigurations-Datensatz als erster Konfigurations-Datensatz und/oder die Entitäts-Parameter in dem Verfahren nach einem der Ansprüche 8 bis 11 empfangen wurden;
Erstellen eines Merkmals-Vektors, der die Entitäts-Parameter aufweist;
Erstellen eines Wahrheits-Vektors, der den Konfigurations-Datensatz repräsentiert und/oder aufweist; und/oder
Assoziieren des Merkmals- und des Wahrheits-Vektors miteinander;
und
Wiederholen des Vorstehenden für eine Vielzahl von Entitäten, um eine Vielzahl von miteinander assoziierten Merkmals- und Wahrheits-Vektoren zu erhalten, die den Trainings-Datensatz darstellen.

14. Verfahren zum Trainieren eines Datenmodells für das maschinelle Lernen, vorzugsweise zum Trainieren des Datenmodells für das maschinelle Lernen des Prozessierungs-Moduls in dem Verfahren nach Anspruch 11, wobei das Verfahren aufweist:
Bereitstellen eines Trainings-Datensatzes, der eine Vielzahl von miteinander assoziierten Merkmals-Vektoren und Wahrheits-Vektoren aufweist, wobei vorzugsweise der Trainings-Datensatz mittelseines Verfahrens nach dem Anspruch 13 generiert wird oder werden kann;
Registrieren des Eingangs des Datenmodells für das maschinelle Lernen mit einem Merkmals-Vektor des Trainings-Datensatzes;
Berechnen des Datenmodells für das maschinelle Lernen vom Eingang zum Ausgang;
Vergleichen des Ausgangs des Datenmodells für das maschinelle Lernen mit dem mit dem Merkmals-Vektor assoziierten Wahrheits-Vektor und Bestimmen eines Fehler-Vektors zwischen den beiden; und/oder
Anpassen des Datenmodells für das maschinelle Lernen basierend auf dem bestimmten Fehler-Vektor;
und
Wiederholen des Vorstehenden für alle anderen Merkmals-Vektoren und assoziierten Wahrheits-Vektoren des Trainings-Datensatzes.

15. Computerprogrammprodukt, umfassend Befehle, die bei der Ausführung des Programms durch eine Vorrichtung zur Datenverarbeitung, insbesondere die Vorrichtung nach Anspruch 7 und/oder nach Anspruch 12, diese veranlassen, das Verfahren nach einem der Ansprüche 1-6 und/oder nach einem der Ansprüche 8-11 auszuführen.

16. Signalfolge, repräsentierend Befehle, die, wenn sie auf einer Vorrichtung zur Datenverarbeitung, insbesondere die Vorrichtung nach Anspruch 7 und/oder nach Anspruch 12, ausgeführt werden, die Vorrichtung veranlassen, das Verfahren nach einem der Ansprüche 1-6 und/oder nach einem der Ansprüche 8-11 auszuführen.
